# EUROPEAN PATENT SPECIFICATION

(11) **EP 1 487 250 B1**
(45) Date of publication and mention of the grant of the patent: **09.05.2007**
(21) Application number: 03713139.8
(22) Date of filing: 04.03.2003
(51) Int. Cl.: A01B 45/04

(54) **SOD HARVESTING MACHINE**
SODENERNTEMASCHINE
MACHINE D'EXPLOITATION DE GAZON

(30) Priority: 07.03.2002 SE 0200687; 08.03.2002 US 362453 P
(43) Date of publication of application: 22.12.2004
(73) Proprietor: GRÄSCENTER I ESKILSTUNA AB, 635 19 Eskilstuna (SE)
(72) Inventor: ROSEN, Kjell, S-635 19 Eskilstuna (SE)
(74) Representative: Strandin, Heléne
(86) International application number: PCT/SE2003/000357
(87) International publication number: WO 2003/073832

(56) References cited:
- EP-A1- 0 581 607
- SE-B- 467 603
- US-A- 4 828 040
- US-A- 5 950 407

## Description

The present invention relates to a device to harvest sod pieces to be formed into rolls and thereafter to be stacked for storage and further transport to an application area.

When harvesting lawn sod rolls, below called sod rolls, machines are used comprising cutting and pick-up devices to cut and pick up pieces of lawn, transportation devices to form the sod rolls out of these pieces and to transport them to stacking devices to assemble and stack the sod rolls in a storage area. Usually the sod rolls of one layer are stacked turned about a quarter of a turn (90°) relative to the adjacent layers of sod rolls to achieve a steady stacking.

To facilitate the roll stacking operation and to achieve a machine that is possible to operate by only one operator it is known from the Swedish patent 9002919-0 to stack the rolls in a closed storeroom to be turned 90° for each layer of with rolls to be stacked in a transverse direction with respect to the adjacent layers, i.e. beneath and above the present layer. In this way only one operator can operate the machine and simultaneously survey the roll transportation to the storeroom and the stacking of rolls therein.

During the deposition of a complete stack of rolls a back door is opened and the stack is lowered onto the ground and the machine rolls forward leaving a stack behind. Thereafter the stack is usually wrapped in net or plastics manually in order to keep the stack steady for transportation away from the field.

A problem with unloading of the stacks behind the machine is that it must be transported away before the machine will pass it the next lap, otherwise it will be in the way for the harvesting of the sod.

Another problem is the wrapping of a stack manually. In the US patent 5950407 describing a machine without a rotatable storeroom but which instead rotates each roll in 90° in every second layer to stack the rolls steady in a fixed stacking means it is shown an automatic wrapping device that after completed stacking will wrap the stack, whereafter the stack is unloaded rearwards.

The object of the present invention is to provide an improved sod harvesting machine, which is provided with automatic stacking means and automatic wrapping means.

Claim 1 specifies an improved sod harvesting machine for automatic stacking of sod rolls according to the invention.

An advantage of the improved sod harvesting machine is that it may be much slimmer in its total width due to the fact that unloading does not need to be done between the rear wheels of the machine.

Another advantage is that the unloaded stacks will not be in the way for the machine when it comes back for the next strip of sod and thus there is no need for a transporting vehicle to pick up the stacks before the machine returns. That means that the same operator first harvesting the sod may come back later and pick up the left stacks for transportation.

A further advantage is that the wrapping of the stack will be performed during its rotation in the rotatable stacking means and during the transversal displacement of the stack during the unloading of the stack. This means that the machine need not to stand still during the wrapping but it may be performed simultaneously with loading of new sod roll onto the layer forming means. The machine needs only to stop at actual unloading, i.e. at lowering of the stack onto the ground. This will provide a highly effective machine.

A preferred embodiment of the present invention will be described in more detail in connection with the drawings, in which:
- Fig. 1: illustrates a sod harvesting machine according to the present invention in an unloading position.
- Fig. 2: illustrates the sod harvesting machine in a stacking position.
- Fig. 3: illustrates rotatable stacking means according to the present invention.
- Fig. 4: illustrates a machine frame showing a space wherein the rotatable stacking means is received.
- Fig. 5: illustrates means for unloading a stack in its outer and lowered position.

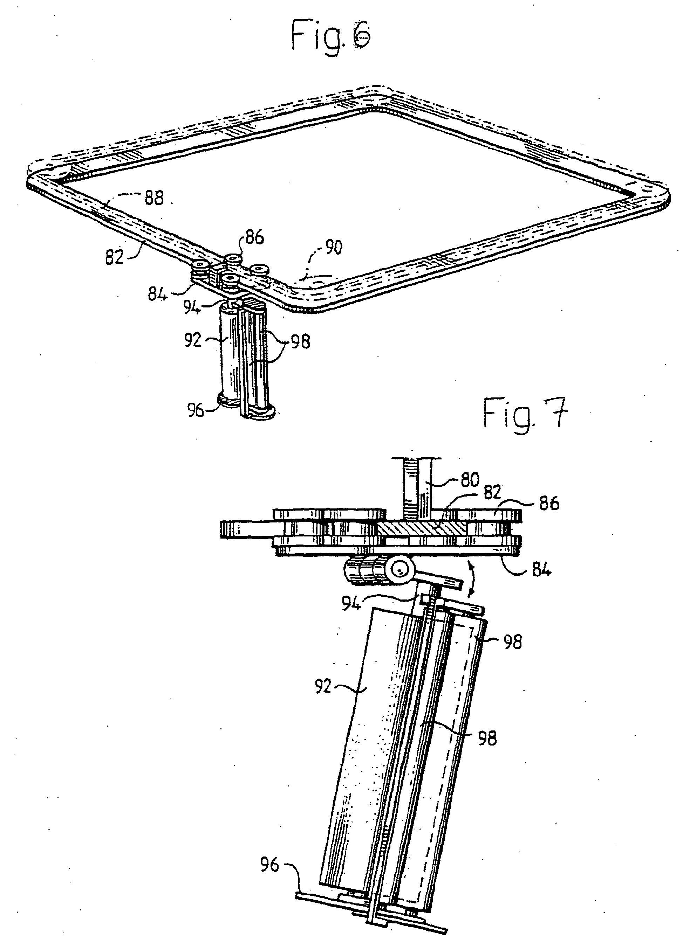

- Fig. 6: illustrates a wrapping device according to the present invention.

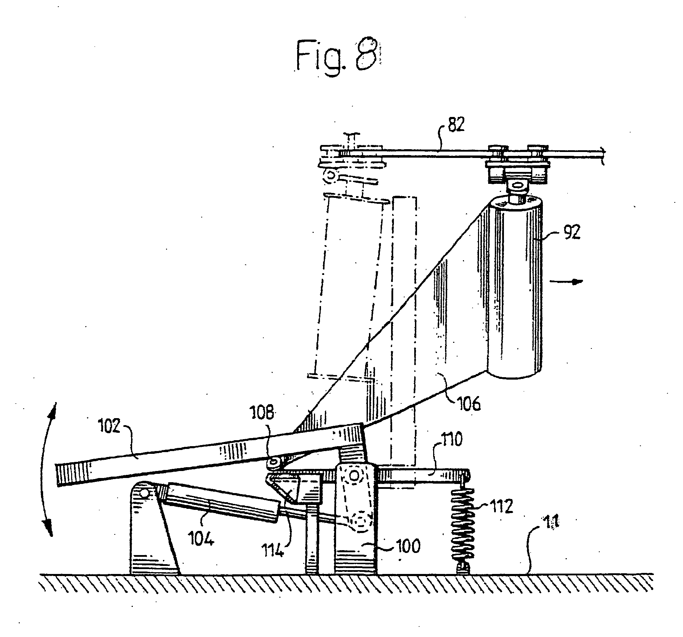

- Fig. 7: illustrates a carriage with wrapping material support means.
- Fig. 8: illustrates a stretching device of the wrapping device.

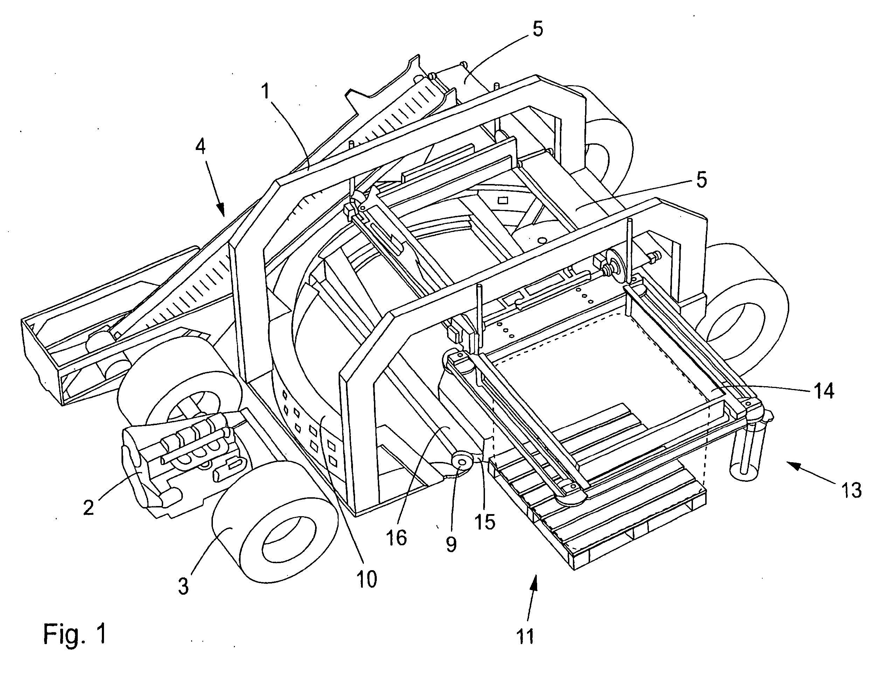

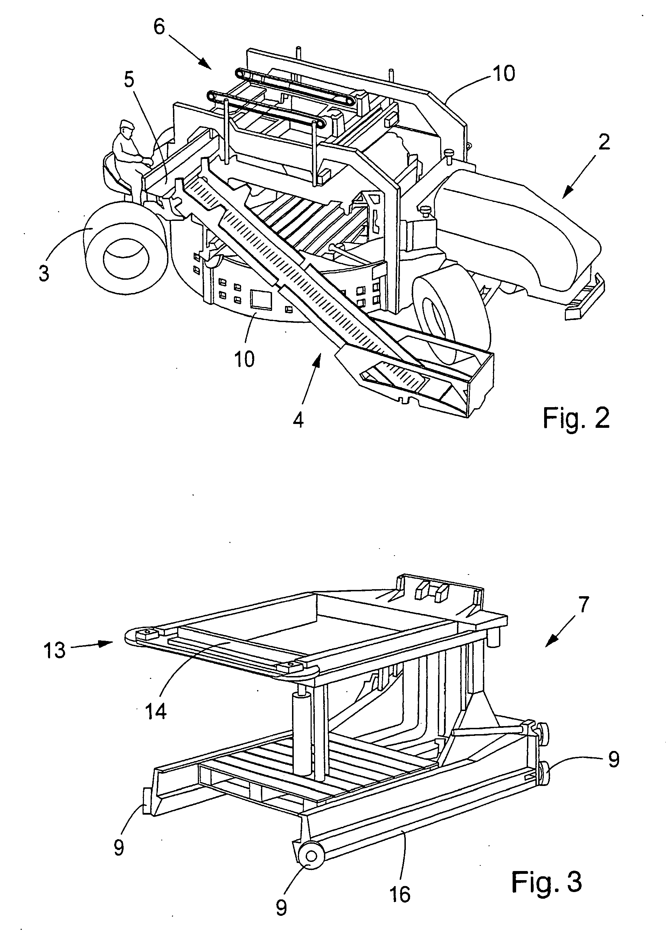

In the shown embodiment, see fig. 1, the sod harvesting machine comprises a machine frame 1 to which a engine 2, wheels 3 and driving means (not shown) for driving the wheels 3 are connected. A sod cutting, transporting and rolling device 4 of any known structure is attached at one side. Transporting means 5 transports the sod rolls to layer forming means 6, see fig. 2, which puts the rolls in a layer on an openable support (not shown) situated above a rotatable stacking means 7, see fig.3. The layer forming means can be as shown in the US patent 5950407 or in the Swedish patent 9002919-0, for example.

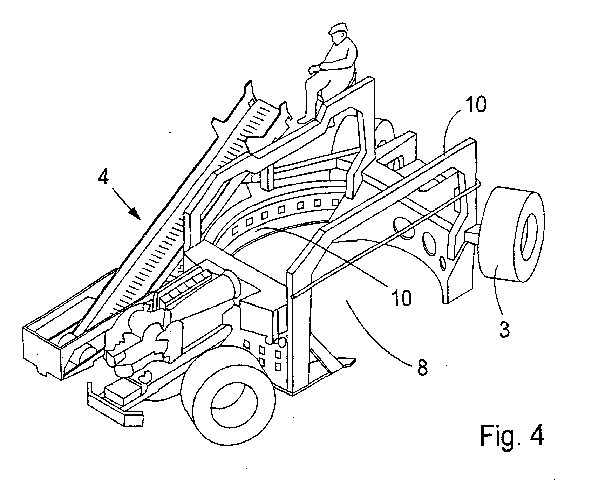

The rotatable stacking means 7 is arranged in a space 8 within the machine frame 1, see fig. 4, and its corner wheels 9 can run along the bow shaped support frame 10, when the stacking means 7 is in its loading position, i.e. when it is inside the space 8 inside the machine frame 1.

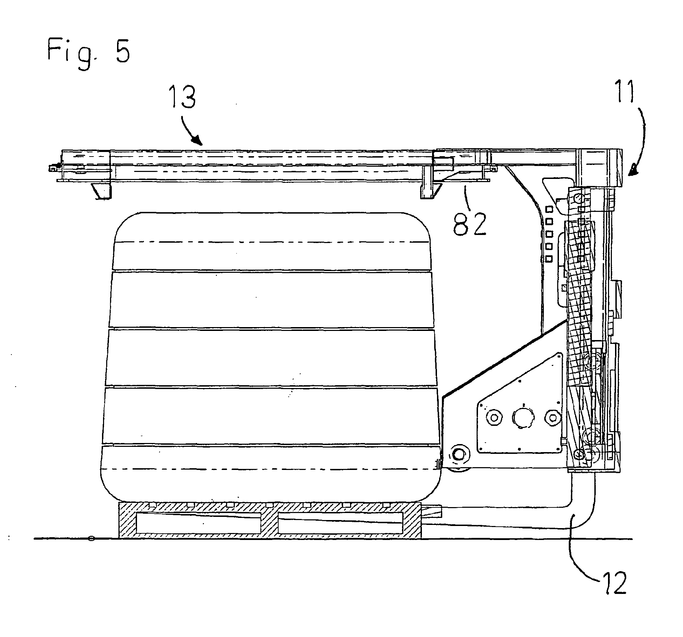

As can be seen in fig. 1 the stacking means 7 is provided with unloading means 11 that can be displaced transversally to the path of travel and when it has reached its outermost position forklift means 12 may be lowered to put the stack on the ground, see fig. 5. Thereafter the unloading means 11 is withdrawn into the stacking means 7 and the forklift means 12 is raised.

The rotatable stacking means 7 is rotatable between two end positions separated substantially 90°. In the first end position the unloading means 11 may be displaced transversally out of the stacking means and in the second end position the unloading means 11 cannot be displaced since it is the turned 90° and any displacement movement would be stopped by the bow shaped support frame 10. The rotation may be performed in any known way, for example by chain transmission or hydraulic means.

The forklift means 12 may lift, for example, a pallet to a position just underneath the openable support so that when a full layer is achieved on the openable support by the layer forming means 6, the support is opened and the layer of rolls will end up on the pallet. The forklift means 12 will then lower the pallet to a suitable height for receiving the next layer of rolls.

The unloading means 11 is provided with wheels 15 that roll along a path in a displacement frame 16 in the lower portion of the rotatable stacking means 7, see fig. 1. The displacement of the unloading means 11 may be performed in different known ways, for example by chain transmission or hydraulic means.

A wrapping device 13 for wrapping at least the uppermost layers of rolls with, for example, net or plastic foil is mounted in the rotatable stacking means 7, more exactly in the top portion of the part forming the unloading means 11. Inside said wrapping device 13 is a support frame 14 mounted for supporting the top layer of rolls before the wrapping is performed.

The wrapping device 13 comprises a guide 82 that is running suspended by means of props 80 in the top portion of the unloading means 11. A carriage comprising a plate runs on the guide 82 with four wheels equipped with a central groove, with which the wheels engage the edges of the guide 82.

A transmission comprising a chain, a cord or similar is arranged for driving the carriage around the guide, whereby cord wheels 90 are arranged in the corners of which at least one is a driving one. On the underside of the carriage a socket comprising a shaft 94 and a bottom plate 96 is articulated fastened for a roll of plastic foil, net, tissue or similar.

From the roll the plastic is passing a stretching device before it is wound up around the stack of sod rolls. The stretching device comprises two rollers 98 over which the foil will pass. A socket 100 is fastened to the unloading means 11 for a pivotably supported lever 102 being pivotably by means of a hydraulic cylinder 104 between the positions shown with continuous and with dotted lines.

When starting the wrapping of the stack the lever 102 has attached the end 106 of the plastic foil against a roll 108 placed on one end of a lever 110, the other end of which is loaded by a spring 112. The end of the plastic foil being thus fixed and the roll 92 is passed around the guide 82 and covers the upper part of the stack.

After a passage of for example 3-4 times of the carriage with the roll 92 around the stack the lever 102 is lifted up to the vertical position shown with dotted lines to free the foil end, i.e. the start end, locked by the lever 102 in its lowered position.

When the carriage with the roll 92 passes next time the foil is placed on the outside of the lever 102 which when lowered will drag the foil down to a locked position. The lever 102 is lowered further when the foil roll having stopped, while the roll 108 stands aside due to the spring load 112 the foil thereby coming into contact with a knife 114 and is cut off, the final end of the plastic foil is freed and can pivot upwards and be attached to the plastic wound around the stack. The lever 102 simultaneously holds back the start end 106 of the foil to be used to cover the next stack.

## Claims

1. A sod harvesting machine for automatic stacking of rolls of sod, comprising means for cutting the sod and thereafter forming the sod into rolls in a rolling station (4), movable conveying means (5) having a surface for conveying the rolls from the rolling station toward layer forming means (6) for layering said rolls into stacking means (7), which is carried by the machine, unloading means (11) for unloading the stack of rolls, a wrapping device (13) mounted in the rotatable stacking means in generally surrounding relationship with said stacking means, said wrapping device comprises a generally continuous guide (82) extending around the outside of the stack of rolls and a carriage (84) movable along said guide and having a wrapping material support means (94, 96) for supporting a roll (92) of wrapping material, such that at least one of the layers of rolls is covered with a wrapping material as said carriage (84) moves along said guide (82) to thereby prevent the separation of said layers of rolls, **characterised in that** the stacking means is rotatable in 90°, the wrapping of the stack of rolls will be performed during rotation of the stack and during the transversally displacement in respect of the path of travel of the stack by the unloading device provided in the rotatable stacking means, before the stack is left on the ground beside the sod harvesting machine.

2. A sod harvesting machine of claim 1, wherein a stretching device (98) is mounted in the unloading means in connection with said wrapping material support means (94, 96) for stretching the wrapping material during the movement of said carriage (84) along said guide (82).

3. A sod harvester of claim 1 or 2, wherein a pivotable support lever (102) is movable between a first position normally spaced exteriorly with respect to said guide (82) to a second position spaced inwardly of said guide (82), means for moving said pivotable support lever (102) from said first to said second position, means (108, 114) associated with said pivotable support lever (102) for severing said wrapping material mounted on said wrapping material support means (94, 96) and for engaging a portion of said wrapping material mounted on said wrapping material support means when in said first position.

4. A sod harvester of claim 1, 2 or 3, wherein a support frame (14) is mounted in the top portion of the transversally displacable unloading means (11) for supporting the top layer of rolls before the wrapping is performed.

## Patentansprüche

1. Sodenerntemaschine zum automatischen Stapeln von Soden-Rollen, mit einer Vorrichtung zum Schneiden der Sode und zum anschließenden Formen der Sode zu Rollen in einer Rollenbildungsstation (4), einer bewegbaren Fördervorrichtung (5), die eine Fläche zum Fördern der Rollen aus der Rollenbildungsstation zu einer Lagenbildungsvorrichtung (6) aufweist, um die Rollen lagenweise in eine von der Maschine gehaltene Stapelvorrichtung (7) einzubringen, einer Entladevorrichtung (11) zum Entladen des Stapels von Rollen, und einer Umwicklungsvorrichtung (13), die an der drehbaren Stapelvorrichtung im Wesentlichen um die Stapelvorrichtung herum angeordnet ist, wobei die Umwicklungsvorrichtung eine im Wesentlichen durchgehende Führung (82), die um die Außenseite des Stapels von Rollen herum verläuft, und einen Wagen (84) aufweist, der entlang der Führung bewegbar ist und mit einer Umwicklungsmaterialhaltevorrichtung (94,96) versehen ist, um eine Rolle (92) von Umwicklungsmaterial derart zu halten, dass während der Bewegung des Wagens (84) entlang der Führung (82) mindestens eine der Rollenlagen mit einem Umwicklungsmaterial bedeckt wird, um **dadurch** eine Trennung der Rollenlagen zu verhindern, **dadurch gekennzeichnet, dass** die Stapelvorrichtung um 90° drehbar ist und das Umwickeln des Rollenstapels während der Drehung des Stapels und während der relativ zu dem Bewegungsweg des Stapels erfolgenden Querbewegung mittels der an der drehbaren Stapelvorrichtung angeordneten Entladevorrichtung durchgeführt wird, bevor der Stapel auf dem Boden neben der Sodenerntemaschine zurückgelassen wird.

2. Sodenerntemaschine nach Anspruch 1, bei der an der Entladevorrichtung eine Spannvorrichtung (98) in Verbindung mit der Umwicklungsmaterialhaltevorrichtung (94,96) angeordnet ist, um während der Bewegung des Wagens (84) entlang der Führung (82) das Umwicklungsmaterial zu dehnen.

3. Sodenerntemaschine nach Anspruch 1 oder 2, bei der ein schwenkbarer Haltehebel (102) zwischen einer normalerweise außen mit Abstand zu der Führung (82) gelegenen ersten Position und einer innen mit Abstand zu der Führung (82) gelegenen zweiten Position bewegbar ist, wobei eine Vorrichtung zum Bewegen des schwenkbaren Haltehebels (102) aus der ersten in die zweite Position und eine mit dem schwenkbaren Haltehebel (102) verbundene Vorrichtung (108,114) vorgesehen sind, um das an der Umwicklungsmaterialhaltevorrichtung (94,96) angeordnete Umwicklungsmaterial abzutrennen und um in der ersten Position mit einem an der Umwicklungsmaterialhaltevorrichtung angeordneten Teil des Umwicklungsmaterials zusammenzugreifen.

4. Sodenerntemaschine nach Anspruch 1, 2 oder 3, bei der in dem oberen Teil der quer bewegbaren Entladevorrichtung (11) ein Halterahmen (14) angeordnet ist, um die obere Rollenlage zu halten, bevor das Umwickeln durchgeführt wird.

## Revendications

1. Machine de récolte de gazon destinée à empiler automatiquement des rouleaux de gazon, comprenant un dispositif de coupe du gazon puis de mise du gazon sous forme de rouleaux à un poste (4) d'enroulement, un dispositif mobile (5) de transport ayant une surface de transport des rouleaux du poste d'enroulement vers un dispositif (6) de formation de couches destiné à disposer en couches les rouleaux dans le dispositif d'empilement (7), qui est porté par la machine, un dispositif de déchargement (11) destiné à décharger la pile de rouleaux, un dispositif d'enveloppement (13) monté dans le dispositif rotatif d'empilement afin qu'il entoure de façon générale le dispositif d'empilement, le dispositif d'enveloppement comprenant un guide (82) continu de façon générale, s'étendant autour de l'extérieur de la pile de rouleaux et un chariot (84) mobile le long du guide ayant un dispositif (94, 96) de support d'un matériau d'enveloppement destiné à supporter un rouleau (92) de matériau d'enveloppement, afin que l'une au moins des couches de rouleaux soit recouverte d'un matériau d'enveloppement lorsque le chariot (84) se déplace le long du guide (82) pour empêcher ainsi la séparation des couches de rouleaux, **caractérisée en ce que** le dispositif d'empilement peut tourner de 90°, et l'enveloppement de la pile de rouleaux est réalisé pendant la rotation de la pile et pendant le déplacement transversal par rapport au trajet de déplacement de la pile sous l'action du dispositif de déchargement placé dans le dispositif rotatif d'empilement, avant que la pile ne soit laissée sur le sol à côté de la machine de récolte de gazon.

2. Machine de récolte de gazon selon la revendication 1, dans laquelle un dispositif d'étirage (98) est monté dans le dispositif de déchargement en coopération avec le dispositif (94, 96) de support de matériau d'enveloppement pour étirer le matériau d'enveloppement pendant le déplacement du chariot (84) le long du guide (82).

3. Machine de récolte de gazon selon la revendication 1 ou 2, dans laquelle un levier pivotant (102) de support est mobile entre une première position normalement espacée à l'extérieur du guide (82) et une seconde position espacée à l'intérieur du guide (82), un dispositif étant destiné à déplacer le levier pivotant (102) de support de la première à la seconde position, un dispositif (108, 114) associé au levier pivotant de support (102) étant destiné à couper le matériau d'enveloppement monté sur le dispositif (94, 96) de support de matériau d'enveloppement et à coopérer avec une partie du matériau d'enveloppement montée sur le dispositif de support de matériau d'enveloppement dans la première position.

4. Machine de récolte de gazon selon la revendication 1, 2 ou 3, dans laquelle un châssis (14) de support est monté dans la partie supérieure du dispositif (11) de déchargement mobile transversalement pour le support de la couche supérieure de rouleaux avant que l'enveloppement ne soit effectué.
